# FASCICULE DE BREVET EUROPEEN

(11) **EP 2 748 487 B1**
(45) Date de publication et mention de la délivrance du brevet: **11.04.2018**
(21) Numéro de dépôt: 12773115.6
(22) Date de dépôt: 24.08.2012
(51) Int. Cl.: F16H 25/20, H02K 7/06

(54) **ACTIONNEUR LINEAIRE**
LINEARER AKTUATOR
LINEAR ACTUATOR

(30) Priorité: 25.08.2011 FR 1157527
(43) Date de publication de la demande: 02.07.2014
(73) Titulaire: Sonceboz Automative SA, 2605 Sonceboz (CH)
(72) Inventeur: FOUCAUT, Antoine, F-70190 Montarlot Les Rioz (FR)
(74) Mandataire: reuteler & cie SA
(86) Numéro de dépôt international: PCT/IB2012/054307
(87) Numéro de publication internationale: WO 2013/027197

(56) Documents cités:
- WO-A1-2010/027701
- US-B2- 7 589 445

## Description

La présente invention concerne le domaine des actionneurs électriques et notamment les actionneurs électriques linéaires.

Il existe deux familles d'actionneurs électriques. La première inclue des moteurs linéaires, c'est-à-dire des actionneurs magnétiques dans lesquels un coulisseau est soumis à une force et se déplace le long d'un stator plat. Cette solution est utilisée pour des cas particuliers de déplacements à très haute vitesse et sur des grandes courses. Mais la complexité de leur construction mène à un coût de fabrication élevé et cette technologie ne permet pas de faire des actionneurs bon marché pour des applications nécessitant des courses de quelques millimètres. La seconde inclue des moteurs électriques rotatifs associés à une transformation de mouvement qui permet de convertir la rotation du rotor en une translation de l'organe de commande. Cette solution permet d'utiliser une construction assez simple et bon marché. Plusieurs solutions de conversion de mouvement peuvent être envisagées, mais la plus utilisée dans ce domaine est la solution vis/écrou car elle permet une construction simple et coaxiale, avec une vis qui se déplace au centre du rotor, ce qui permet d'obtenir un actionneur compacte. De plus la fabrication des composants du système vis écrou est bien maitrisée en grande série et le coût ainsi que la fiabilité de l'actionneur sont bien maitrisés.

Les solutions connues d'actionneurs linéaires sur la base d'un système vis écrou sont conçues de la façon suivante : un moteur comportant un stator bobiné, un rotor équipé d'un aimant multipolaire et possédant en son centre un écrou qui collabore avec une vis. Cette vis est bloquée en rotation par une liaison de type glissière avec une partie fixe, solidaire du stator, de sorte que la rotation du rotor, entraine un mouvement de translation pure de la vis, qui constitue l'organe de commande de l'actionneur.

Cette solution, basée sur une transformation de mouvement de type hélicoïdale présente les inconvénients suivants :
- La transformation de mouvement possède un rendement mécanique fortement dépendant de l'angle d'hélice de l'écrou et de la vis.
- Lorsqu'une forte réduction du mouvement est requise pour accroitre la force de sortie, l'angle d'hélice doit être choisi assez faible et dans ces conditions, le rendement direct, qui converti le couple en force, voit sa valeur baisser sensiblement.
- Ce même phénomène est encore plus sensible sur le rendement inverse de la transformation, celle qui permet de convertir un effort sur l'axe de sortie en couple d'entrainement sur le rotor. Cette caractéristique est particulièrement pénalisante dans le cas d'actionneur dit «fail safe» (à sécurité intrinsèque ou intégrée) qui possède un élément de rappel élastique apte à ramener l'actionneur en position de référence, lors d'une coupure d'alimentation- voir par exemple US7589445.
- La construction classique de la solution vis / écrou est telle que l'effort axial exercé par l'actionneur est repris mécaniquement par l'écrou. Or les solutions d'actionneurs actuelles utilisent des vis/écrous à friction et non des vis /écrou à bille. L'effort axial important appliqué à l'interface vis/écrou glisse ou frotte et conduit à une usure importante qui provoque l'apparition d'un jeu. Ce jeu peut poser des problèmes lors d'un pilotage en position exigeant une grande précision.
- La résolution axiale de l'actionneur électrique est le plus souvent donnée par la résolution angulaire du moteur rotatif, et par le facteur de réduction du mouvement de la transformation. Comme la résolution angulaire du rotor est souvent limitée, il est nécessaire d'avoir une forte réduction dans la transformation de mouvement mais cela conduit à des rendements direct et inverse faibles avec les inconvénients déjà cités plus haut.

Dans WO2010/027701 on décrit un actionneur avec une vis comprenant deux parties filetées avec des filetages croisées engagées par des moteurs tournant en sens inverse afin de déplacer la vis en translation avec une force supérieure qu'avec un système ne comprenant qu'un moteur. Les filetages croisés permettent d'annuler le couple résultant exercé sur la vis par les deux moteurs.

Un objet de l'invention est de fournir un actionneur électrique linéaire économique, compact et performant.

Il est avantageux de fournir un actionneur linéaire ayant une bonne réversibilité, et notamment pour pouvoir fonctionner en mode dit « fail-safe » (à sécurité intégrée ou intrinsèque en cas de panne) de manière fiable.

Il est avantageux de fournir un actionneur linéaire pouvant être configuré facilement pour une vitesse de déplacement ou une force d'actionnement selon les besoins, ou encore de pouvoir générer une sortie en déplacements linéaire et rotatif.

Dans la présente invention, un actionneur linéaire électrique comprend un moteur électrique avec un rotor et un stator, un boîtier, et un système vis-écrou pour le déplacement d'un organe à déplacer au moins en translation dans une direction A correspondant à l'axe de rotation du rotor, le système vis-écrou comprenant une vis avec une première portion filetée et un premier écrou avec un filetage complémentaire engageant la première portion filetée, le premier écrou étant couplé en rotation au rotor. La vis comprend une deuxième portion filetée et le système vis-écrou comprend un deuxième écrou engageant la deuxième portion filetée, la deuxième portion filetée et le deuxième écrou étant configurés pour appliquer un facteur de réduction dans le déplacement linéaire de la vis par rapport à un système vis-écrou disposant seulement de la première portion filetée et du premier écrou dans le rotor, les première et deuxième portions filetées ayant des filetages croisés l'un par rapport à l'autre.

Dans une forme d'exécution, la première portion filetée est adjacente à la deuxième portion filetée.

Dans une forme d'exécution avantageuse, l'angle des filetages des première et deuxième portions filetées par rapport à un plan orthogonal à l'axe de rotation A sont d'amplitude identique, mais de signes différents. Dans une variante, l'angle des filetages des première et deuxième portions filetées peuvent être d'amplitudes différentes et de signes différents.

Dans une forme d'exécution, le premier écrou est solidaire ou fixé ou couplé au rotor de manière non-amovible.

Dans une forme d'exécution, le premier écrou est couplé au rotor de manière amovible, configuré pour effectuer au moins une translation dans une direction parallèle à l'axe A de rotation du rotor.

Dans une forme d'exécution, le deuxième écrou est couplé au boîtier de manière non-amovible, ou solidaire du boîtier.

Dans une forme d'exécution, le deuxième écrou est couplé au premier écrou ou au rotor du moteur au moyen d'un système d'engrenage formant un réducteur différentiel.

L'organe à déplacement linéaire peut comprendre une partie de guidage engageant une partie de guidage couplée ou fixée au boîtier. Dans une variante, la partie de guidage est configurée pour définir un mouvement en translation pure de l'organe à déplacer. Dans une autre variante, la partie de guidage est configurée pour effectuer un mouvement en translation et en rotation simultané de l'organe à déplacer.

Dans une forme d'exécution, un ressort de rappel peut avantageusement être intégré dans le boîtier et couplé à une extrémité de la vis, configuré pour déplacer la vis dans une position de sécurité intrinsèque (« fail-safe ») en cas de panne de l'actionneur.

Un capteur de position peut avantageusement être disposé dans le boîtier et configuré pour détecter la position axiale de la vis.

Dans une forme d'exécution, une extrémité de la vis est couplée à l'organe à déplacer à travers un palier permettant la rotation libre de la vis par rapport à l'organe à déplacer. Le palier couplant la vis à l'organe à déplacer est, selon une variante, sous forme d'un roulement à billes, ou selon une autre variante, sous forme d'une rotule.

Le moteur peut avantageusement être sous forme d'un moteur électrique polyphasé, notamment un moteur de type pas-à-pas.

D'autres buts et aspects avantageux de l'invention apparaîtront à la lecture des revendications et/ou de la description détaillée ci-après de formes d'exécution de l'invention en relation avec les figures, dans lesquelles :

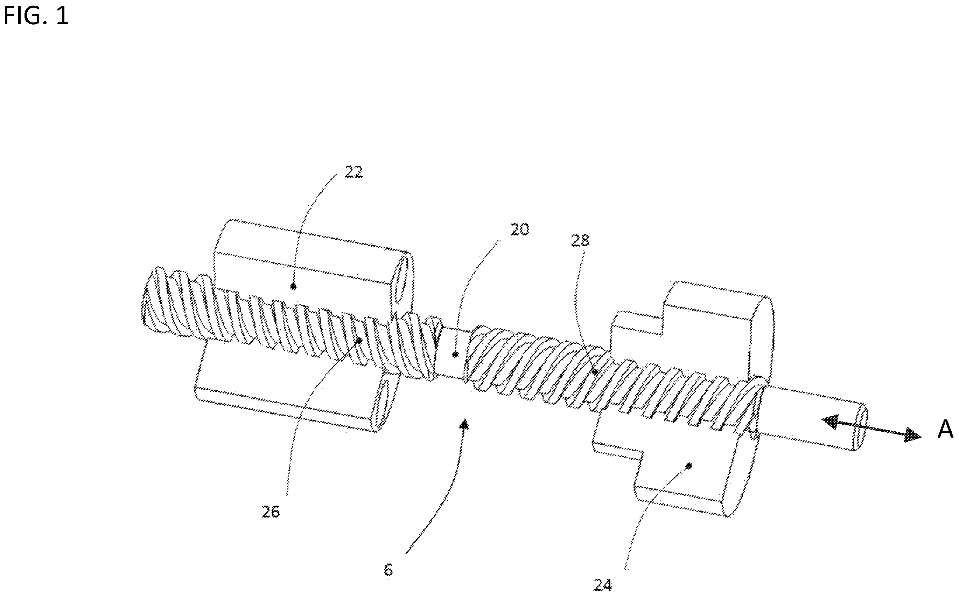

La Fig. 1 est une vue en perspective simplifiée et en coupe partielle d'une forme d'exécution d'un système vis-écrou d'un actionneur linéaire selon l'invention ;
La Fig. 2 est une vue en coupe longitudinale d'un actionneur linéaire, selon une forme d'exécution de l'invention ;
La Fig. 3 est une vue en coupe longitudinale d'un actionneur linéaire, selon une autre forme d'exécution de l'invention ;
La Fig. 4 est une vue schématique en coupe d'un actionneur linéaire selon une troisième forme d'exécution de l'invention;
La Fig. 5 est une vue en coupe d'un actionneur linéaire selon une quatrième forme d'exécution de l'invention;
La Fig. 6 est une vue en coupe d'un actionneur linéaire selon une cinquième forme d'exécution de l'invention ; et
La Fig. 7 est une vue en coupe d'un actionneur linéaire selon une sixième forme d'exécution de l'invention.

Faisant référence aux figures, un actionnaire linéaire 2, selon différentes formes d'exécution de l'invention, comprend un moteur 4 entraînant un système vis-écrou 6 monté dans un boîtier 8, et un organe à déplacer 15 entraîné par le système vis-écrou 6. L'actionneur linéaire peut en outre comprendre un ressort de rappel 12 pour amener l'organe à déplacer 15 dans une position de sécurité intrinsèque dite « fail-safe », le ressort de rappel étant monté dans le boîtier 8 dans une forme d'exécution préférentielle. Il est également possible de ne pas avoir de ressort de rappel si la fonction de sécurité intégrée (« fail-safe ») n'est pas nécessaire, ou d'avoir un ressort de rappel couplé à l'élément ou l'organe à déplacer à l'extérieur du boîtier de l'actionneur.

Le moteur 4 est de préférence un moteur électrique polyphasé, par exemple un moteur du type pas-à-pas, et comprend un rotor 16 et un stator 18.

Le système vis-écrou 6 comprend une vis 20 à déplacement linéaire et à déplacement rotatif, un premier écrou 22 et un deuxième écrou 24. La vis 20 comprend une première portion filetée 26 et une deuxième portion filetée 28, de préférence selon des variantes l'une à côté de l'autre, alignées sur un axe A de rotation de la vis. Les première et deuxième portions filetées ont chacune des filetages qui ont des directions croisées ou opposées de façon à ce que des écrous engagés par les filetages respectifs auront un déplacement relatif linéaire en sens opposé lors de la rotation de la vis. Le premier écrou 22 du système vis-écrou engage la première portion filetée 26 et le deuxième écrou 24 engage la deuxième portion filetée 28.

Le premier écrou 22 est couplé en rotation au rotor. La rotation du premier écrou sur la première portion filetée 26 entraine la vis en translation, mais également en rotation du fait du couplage de la deuxième portion filetée 28 avec le deuxième écrou 24 statique par rapport au boitier, résultant dans un facteur de réduction dans le déplacement linéaire de la vis par rapport à un système ne comprenant qu'un portion filetée et qu'un écrou pour effectuer le déplacement linéaire d'une vis bloquée en rotation.

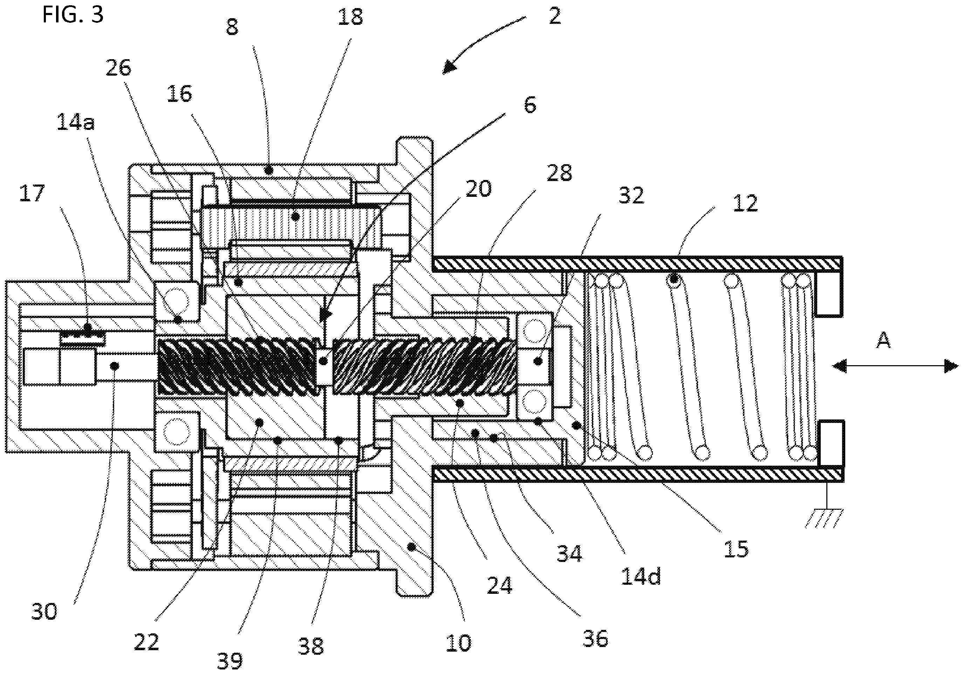

La vis s'étend entre une première extrémité 30 disposée selon des variantes à l'intérieur du boîtier 8 jusqu'à une deuxième extrémité 32 couplée à l'organe à déplacer 15 ou à tout autre élément à déplacer par l'actionneur linéaire. Le rotor est guidé, selon les variantes, soit par deux paliers 14a, 14b placés de part et d'autre dudit rotor, soit par un seul palier 14a. Le ou les paliers sont de préférence des roulements à billes. La vis peut être guidée uniquement par les deux écrous 22 et 24, ou par un palier. Lorsque le ressort de rappel 12 applique sa charge sur l'extrémité 30 de la vis 20, un troisième palier 14c peut être inclus pour autoriser la rotation relative entre le ressort, qui est fixe par rapport au boitier 8, et la vis 20 qui se déplace suivant un mouvement hélicoïdal. Lorsque le ressort de rappel est disposé à l'extérieur de l'actionneur, selon la variante de la figure 3, ce dernier applique sa charge sur l'organe de commande 15 qui se déplace selon une translation pure.

Le boîtier 8 peut comprendre un flasque 10 du côté de la sortie de la vis et de l'organe à déplacer 15, le flasque comprenant une partie de guidage 34, 34', complémentaire à une partie de guidage 36 de l'organe à déplacer 15 pour le support et le guidage en déplacement linéaire de l'organe à déplacer.

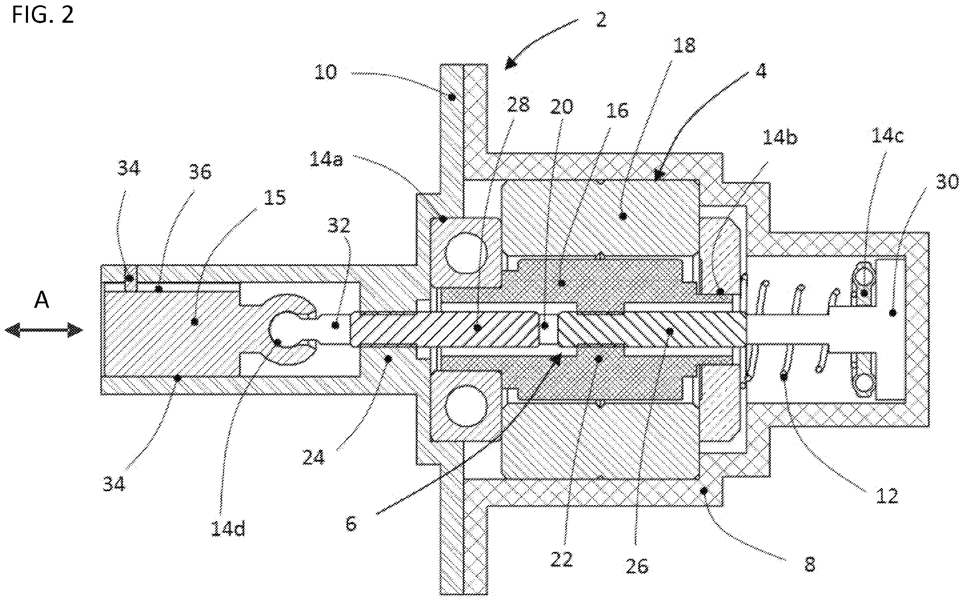

Dans la forme d'exécution de la Fig. 2, les éléments de guidage 34, 34', 36 sont configurés pour permettre à l'organe de commande 15 d'exploiter le déplacement linéaire de la vis 4, mais de supprimer la composante de rotation. Il est également possible, en supprimant l'organe 15 et les éléments de guidage 34,34', 36 d'utiliser l'extrémité 32 de la vis 20 directement comme organe de commande, lequel possède alors un mouvement hélicoïdal. Ainsi, le système peut être facilement configuré pour différentes sorties, en translation pure ou en combinaison de translation et de rotation.

Dans la variante illustrée dans la Fig. 2, l'extrémité en sortie 32 de la vis comprend une rotule 14d logée dans une partie complémentaire de l'organe à déplacer 15 sous forme d'une calotte sphérique pour permettre la rotation libre entre la vis et l'organe à déplacer, qui peut donc effectuer un mouvement sans rotation ou selon une rotation définie par les guidages complémentaires 36, 34, 34' indépendamment de la rotation de la vis, en fonction du déplacement en translation de la vis et de l'organe à déplacer. La rotule 14d peut aussi former l'un des paliers de support de la vis 20 et par conséquent aussi du rotor 16.

Faisant référence à la Fig. 2, le premier écrou 22 est disposé dans un passage central du rotor 16 et est solidaire du rotor, soit en faisant partie intégrale du rotor ou en étant une pièce assemblée et fixée au rotor. Le deuxième écrou 24 est fixé de manière non-amovible au boîtier 8, dans cet exemple, à la flasque 10 du boîtier, soit en faisant partie intégrale de la flasque ou du boîtier, soit en étant une pièce assemblée et fixée au boîtier de façon à être non-amovible. Les filetages des écrous 22, 24 correspondent aux filetages respectifs 26, 28 de la vis. Dans cette forme d'exécution, lorsque le rotor 16 tourne, la vis 20 avance ou recule dans la direction axiale A en effectuant également une rotation à cause de l'engagement de la deuxième portion filetée 28 avec le deuxième écrou 24. L'effet sur le déplacement linéaire de l'organe à déplacer 15 est qu'il y a un facteur de réduction par rapport à un système vis-écrou conventionnel disposant seulement de la première portion filetée et du premier écrou dans le rotor. Si les filetages des première et deuxième portions filetées 26, 24 ont un angle d'hélice équivalent (mais de sens opposé) par rapport au plan orthogonal à l'axe de rotation, le facteur de réduction dans le déplacement linéaire selon l'axe A de la vis est de deux. Le facteur de réduction peut être augmenté ou diminué en changeant l'angle du filetage de l'une ou l'autre des portions filetées.

En faisant toujours référence à la Fig. 2, la première extrémité 30 de la vis 20 est couplée au ressort de rappel 12 qui appuie contre une épaule ou un disque formée à l'extrémité de la vis à travers l'un des paliers 14a. En raison du facteur de réduction dû aux deux portions filetées croisées, l'angle d'hélice de filetage peut être plus important par rapport au plan orthogonal à l'axe de rotation que dans un système conventionnel. Cela améliore la réversibilité du système et permet notamment au ressort de rappel 12 de ramener la vis dans sa position de sécurité intrinsèque dite « fail-safe » illustrée dans la Fig. 2, en vainquant les forces de frottement entre la deuxième portion filetée 28 et le deuxième écrou 24.

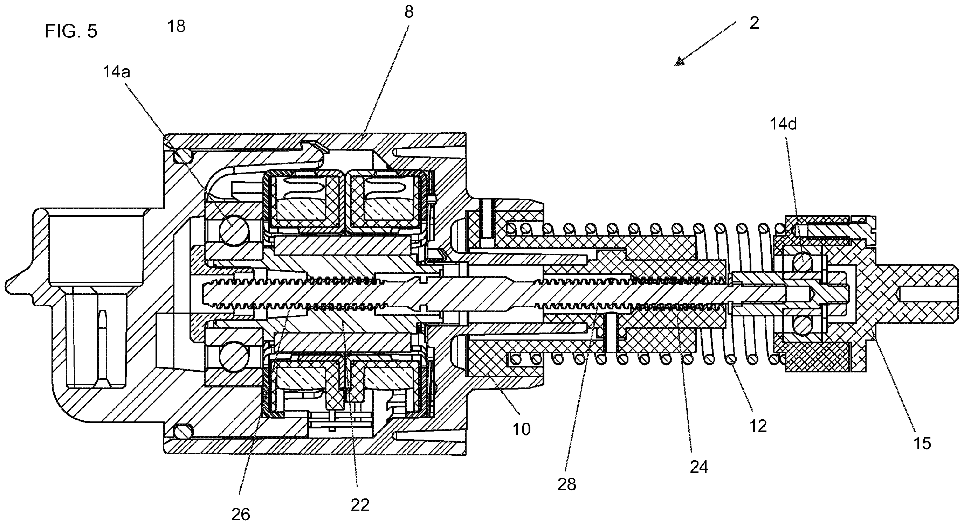

Faisant maintenant référence aux figures. 3 et 5, dans ces formes d'exécution la deuxième extrémité 32 de la vis est couplée à l'organe à déplacer 15 à travers un palier 14d, par exemple sous forme d'un palier à billes, permettant une rotation libre entre la vis et l'organe à déplacer 15. L'organe à déplacer peut avoir un déplacement en translation pure selon l'axe *A,* ou en translation et en rotation combinée en fonction de la configuration des éléments de guidage 34, 36 complémentaires.

Au lieu d'un guidage cylindrique de l'organe 15 dans le flasque avant 10 (Fig. 3), on peut également envisager un doigt engagé dans une came pour un déplacement en rotation de l'organe 15 entrainé linéairement par la vis 20, et qui se fait selon une fonction de came choisie.

Dans les formes d'exécution des Fig. 3 et 5, le deuxième écrou 24 est statique par rapport au flasque 10, dans ces exemples, sous forme d'une pièce assemblée au flasque lequel est fixé solidairement au boîtier. Un ressort de rappel est monté à l'extérieur du boîtier dans ces variantes illustrées, mais il est également possible d'inclure un ressort de rappel, par exemple sous forme d'un ressort de torsion ou à barillet, à l'intérieur du boitier. Un capteur de position 17 peut être intégré dans l'actionneur (Fig. 3) pour mesurer la position du déplacement linéaire de la vis, ou pour former un point de référence pour calibrer le positionnement de la vis, par exemple à chaque mise en marche ou selon un programme prédéterminé, le capteur de position étant disposé par exemple à la première extrémité 30 de la vis telle qu'illustrée dans la Fig. 3.

Dans les variantes des Fig. 3 et 5, le premier écrou 22 peut être fixé au rotor 16 de manière non-amovible comme dans la forme d'exécution de la Fig. 2. Dans d'autres variantes, l'écrou 22 peut être monté de manière amovible dans le rotor 16 pour pouvoir effectuer un déplacement en rotation et simultanément en translation dans la direction de l'axe de rotation A. Le déplacement relatif du premier écrou 22 par rapport au rotor 16 peut se faire uniquement en translation dans la direction axiale A. Il est également possible d'inclure des éléments de guidage entre le rotor 16 et l'écrou 22 permettant un déplacement relatif entre l'écrou 22 et le rotor 16 en translation et en rotation, afin de modifier le facteur de réduction de la transmission du mouvement rotatif de rotor jusqu'au déplacement linéaire de la vis 20. Les éléments de guidage complémentaires 38, 39 entre le rotor 16 et le premier écrou 22 peuvent donc prendre différentes formes configurées pour déterminer le déplacement relatif entre l'écrou et le rotor, soit en translation pure, soit en combinaison de translation et de rotation selon la forme de guidage complémentaire.

Le facteur de réduction entre la rotation du rotor 16 et la translation linéaire de la vis 20 sera donc déterminé non seulement par le pas de filetage des première et deuxième portions de vis 26, 28, mais également par le déplacement de l'écrou 22 en translation, ou en translation et rotation.

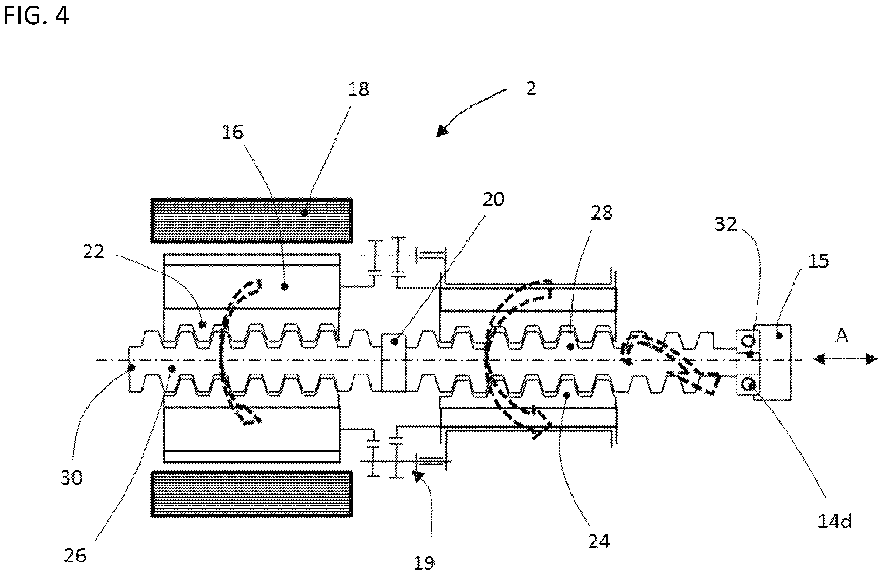

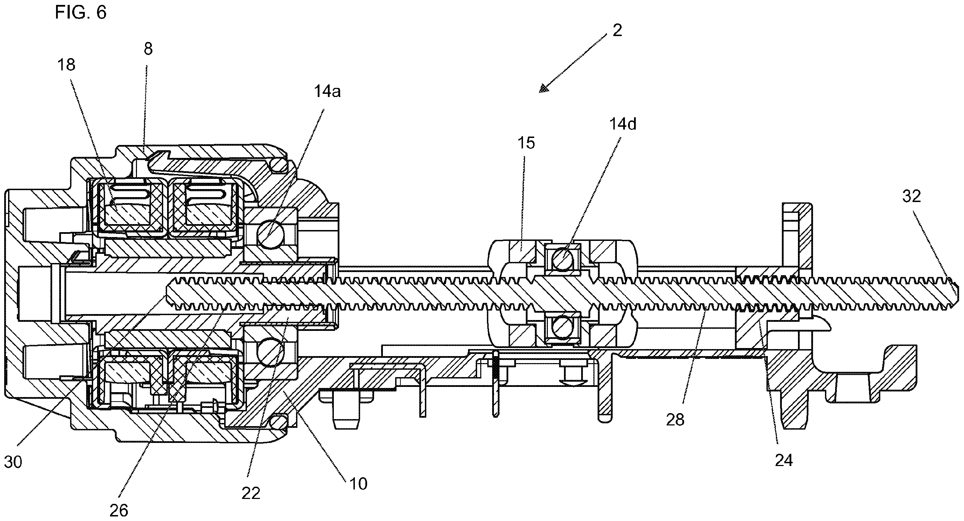

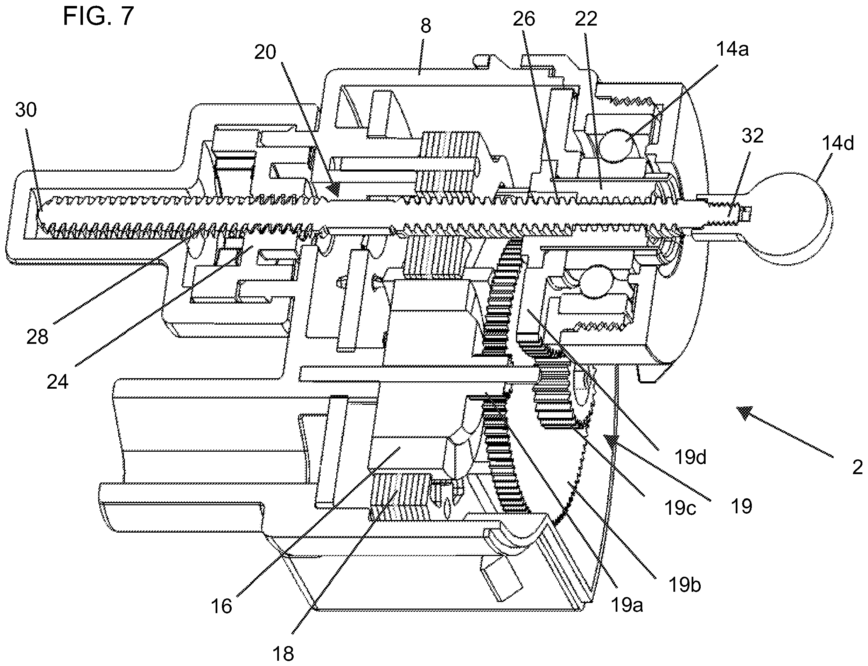

Dans les variantes illustrées, les diamètres des filetages des première et deuxième portions filetées sont identiques, toutefois il est également possible d'avoir des diamètres des filetages des première et deuxième portions filetées différents. Faisant référence à la Fig. 4, il est également possible d'inclure un système d'engrenage 19 couplant les premier et deuxième écrous 22, 24, par exemple sous forme d'un réducteur différentiel qui permet de changer le facteur de réduction global de rotation du rotor 16 sur le déplacement linéaire en translation de la vis 20. Ce réducteur différentiel permet de faire tourner les deux écrous à des vitesses différentes et de générer la translation de l'organe de commande avec un facteur de réduction important, le rapport différentiel des vitesses des deux écrous se cumule avec le rapport de réduction intrinsèque à la transformation de mouvement par écrous croisés.
Faisant référence à la Fig. 6 l'organe à déplacer 15 est sous forme d'un chariot positionné entre les deux portions filetées 26, 28 de la vis et monté sur la vis au moyen d'un roulement 14d positionné permettant de bloquer la rotation du chariot et de n'exploiter que la composante en translation de la vis. Le premier écrou 22 du système vis-écrou est fixé au rotor 16 et le deuxième écrou 24 est fixé à un extrémité du boitier d'actionneur avec l'organe à déplacer 15 monté coulissant sur ou dans le boitier entre les deux écrous.
Dans les variantes des figures 2, 3, 5 et 6, le deuxième écrou 24 est fixe par rapport au boitier lorsque la vis se déplace. Il est possible, dans des variantes, de configurer le montage du deuxième écrou 24 dans le boitier de sorte à ce qu'on puisse le tourner en plusieurs positions angulaires d'insertion dans le boitier. Cela permet d'effectuer un réglage manuel de la position initiale de la vis, avant mise en service de l'actionneur électrique.
Faisant référence à la Fig. 7, il est également possible d'inclure un système d'engrenage 19 couplant le rotor 16 au premier écrou 22, qui permet de d'augmenter le facteur de réduction global de rotation du rotor 16 sur le déplacement linéaire en translation de la vis 20. Ce système d'engrenage réducteur, dans cet exemple comprenant des roues dentées 19a, 19b, 19c, 19d, permet de faire tourner le premier écrou 22 à une vitesse inférieure à la rotation du rotor 16 du moteur et de générer la translation de la vis 20 avec un facteur de réduction important, le rapport de réduction des engrenages se cumulant avec le rapport de réduction intrinsèque à la transformation de mouvement par écrous croisés.

Des avantages des solutions selon l'invention sont :
- A angle d'hélice égale avec un système vis écrou « simple », le rapport de réduction de la transformation de mouvement bénéficie d'un facteur deux. Cela signifie que pour un même angle de rotation du rotor lié à l'écrou mobile par rapport à l'écrou fixe, le déplacement linéaire de la vis est deux fois moindre que dans le cas du système vis écrou connu. Cela vient du fait que le mouvement de la vis est hélicoïdal et celle-ci est mobile par rapport aux deux écrous et non un seul.
- Si l'on ne souhaite pas bénéficier du rapport de réduction double, on peut augmenter l'angle d'hélice, et en comparaison d'un système vis écrou simple qui aurait le même rapport de réduction, on obtient des rendements directs et inverse qui sont sensiblement plus élevés car croissants avec l'angle d'hélice.
- Cette possibilité d'avoir un rendement inverse plus élevé permet d'avoir un retour en position de référence plus aisé dans le cas d'un actionneur à sécurité intégrée (dit « fail safe »), et de réduire la force du système de rappel élastique. Cela a aussi pour conséquence une force utile accrue pour l'actionneur.
- L'augmentation du facteur de réduction par la double hélice peut aussi être intéressante pour multiplier par deux la résolution axiale de l'actionneur.
- L'augmentation du facteur de réduction par la double hélice peut apporter également un intérêt important car, pour une même vitesse linéaire de l'organe de sortie, cela augmente la vitesse de rotation du moteur polyphasé, lequel moteur a un rendement électromécanique supérieur. En effet la courbe de rendement d'un moteur électrique est croissante et l'on a toujours intérêt à augmenter la vitesse de rotation moyenne du moteur pour gagner sur le rendement interne du moteur. Cette solution à écrous croisés permet une réduction de mouvement doublée et donc d'améliorer ce rendement par modification du point de travail du moteur électrique.
- La construction d'un actionneur avec écrous croisés est similaire à celle d'un écrou simple en termes d'encombrement. Il suffit de remplacer la liaison glissière de l'anti rotation traditionnel par une seconde liaison hélicoïdale de même longueur.
- La solution selon l'invention est équivalente à un actionneur qui posséderait un réducteur à engrenage d'un rapport de réduction, par exemple par deux, placé en amont d'un système vis écrou simple. Cela présente donc un intérêt évident de simplification de la construction et de fiabilité par l'absence d'engrenages mais aussi un intérêt sur la fiabilité du système qui tolère mieux les vibrations. En comparaison avec une telle solution réducteur plus vis écrou, l'assemblage est également très simplifié.

## Revendications

1. Actionneur linéaire électrique incluant un moteur électrique (4) comportant un rotor (16) et un stator (18), un boîtier (8, 10), et un système vis-écrou (16) pour le déplacement d'un organe à déplacer (15) au moins en translation dans une direction (A) parallèle à l'axe de rotation du rotor, le système vis-écrou (6) comprenant une vis (20) avec une première portion filetée (26) et un premier écrou (22) avec un filetage complémentaire engageant la première portion filetée (26), le premier écrou (22) étant couplé en rotation au rotor, la vis (20) comprenant une deuxième portion filetée (28) et le système vis-écrou comprenant un deuxième écrou (24) engageant la deuxième portion filetée (28), la deuxième portion filetée et le deuxième écrou configurés pour appliquer un facteur de réduction dans le déplacement linéaire de la vis par rapport à un système vis-écrou disposant seulement de la première portion filetée et du premier écrou dans le rotor, les première et deuxième portions filetées ayant des filetages croisés l'un par rapport à l'autre.

2. Actionneur selon la revendication 1, **caractérisé en ce que** le deuxième écrou (24) est solidaire du boîtier, ou est couplé au boîtier (8) de manière non-amovible.

3. Actionneur selon la revendication 1 ou 2, **caractérisé en ce qu'**il comprend un système d'engrenages réducteur (19) couplant le premier écrou (22) au rotor.

4. Actionneur selon la revendication 1, **caractérisé en ce que** le deuxième écrou (24) est couplé au premier écrou (22) ou au rotor (16) du moteur au moyen d'un système d'engrenage formant un réducteur différentiel.

5. Actionneur selon l'une quelconque des revendications précédentes, **caractérisé en ce que** la première portion filetée (26) est adjacente à la deuxième portion filetée (28).

6. Actionneur selon l'une quelconque des revendications précédentes, **caractérisé en ce que** les angles des filetages des première et deuxième portions filetées par rapport à un plan orthogonal à l'axe de rotation A sont d'une amplitude identique, mais de signes différents.

7. Actionneur selon l'une des revendications 1 à 5, **caractérisé en ce que** les angles des filetages des première et deuxième portions filetées par rapport à un plan orthogonal à l'axe de rotation *A,* sont d'amplitudes différentes et de signes différents.

8. Actionneur selon l'une quelconque des revendications précédentes, **caractérisé en ce que** les diamètres des filetages des première et deuxième portions filetées sont identiques.

9. Actionneur selon l'une quelconque des revendications 1 à 7, **caractérisé en ce que** les diamètres des filetages des première et deuxième portions filetées sont différents.

10. Actionneur selon l'une quelconque des revendications précédentes, **caractérisé en ce que** le premier écrou (22) est solidaire ou fixé ou couplé au rotor de manière non-amovible.

11. Actionneur selon l'une quelconque des revendications 1 à 9, **caractérisé en ce que** le premier écrou (22) est couplé au rotor de manière amovible, configuré pour effectuer au moins une translation dans une direction parallèle à l'axe A du rotor (16).

12. Actionneur selon l'une quelconque des revendications précédentes, **caractérisé en ce que** l'organe à déplacement linéaire (15) comprend une partie de guidage (36) engageant une partie de guidage (34, 34') couplée ou fixée au boîtier (8), les parties de guidage configurées pour définir un mouvement en translation pure de l'organe à déplacer (15).

13. Actionneur selon l'une quelconque des revendications précédentes 1 à 11, **caractérisé en ce que** l'organe à déplacement linéaire (15) comprend une partie de guidage (36) engageant une partie de guidage (34, 34') couplée ou fixée au boîtier (8), les parties de guidage configurées pour effectuer un mouvement en translation et en rotation simultané de l'organe à déplacer (15).

14. Actionneur selon l'une quelconque des revendications précédentes, **caractérisé en ce qu'**il comprend un ressort de rappel (12) couplé à la vis (20), configuré pour déplacer la vis dans une position « fail-safe » en cas de panne de l'actionneur.

15. Actionneur selon l'une quelconque des revendications précédentes, **caractérisé en ce que** la vis est couplée à l'organe à déplacer (15) à travers un palier permettant la rotation libre de la vis par rapport à l'organe à déplacer.

## Patentansprüche

1. Linearer elektrischer Aktuator, einschließend einen Elektromotor (4), aufweisend einen Rotor (16) und einen Stator (18), ein Gehäuse (8, 10) und ein Schraube-Mutter-System (16) für die Verlagerung eines zu verlagernden Organs (15) mindestens translatorisch in einer zur Rotationsachse des Rotors parallelen Richtung (A), wobei das Schraube-Mutter-System (6) eine Schraube (20) mit einem ersten gewindeten Abschnitt (26) und eine erste Mutter (22) mit einem komplementären Gewinde umfasst, die den ersten gewindeten Abschnitt (26) aufnimmt, wobei die erste Mutter (22) rotierend mit dem Rotor gekoppelt ist, wobei die Schraube (20) einen zweiten gewindeten Abschnitt (28) umfasst und das Schraube-Mutter-System eine zweite Mutter (24) umfasst, die den zweiten gewindeten Abschnitt (28) aufnimmt, wobei der zweite gewindete Abschnitt und die zweite Mutter konfiguriert sind, um einen Reduzierfaktor bei der linearen Verlagerung der Schraube in Bezug zu einem Schraube-Mutter-System anzuwenden, das nur über den ersten gewindeten Abschnitt und die erste Mutter in dem Rotor verfügt, wobei der erste und zweite gewindete Abschnitt zueinander gekreuzte Gewinde haben.

2. Aktuator nach Anspruch 1, **dadurch gekennzeichnet, dass** die zweite Mutter (24) mit dem Gehäuse fest verbunden ist oder nicht lösbar mit dem Gehäuse (8) gekoppelt ist.

3. Aktuator nach Anspruch 1 oder 2, **dadurch gekennzeichnet, dass** er ein Untersetzungsgetriebesystem (19) umfasst, das die erste Mutter (22) mit dem Rotor koppelt.

4. Aktuator nach Anspruch 1, **dadurch gekennzeichnet, dass** die zweite Mutter (24) mit der ersten Mutter (22) oder mit dem Rotor (16) des Motors mittels eines Getriebesystems gekoppelt ist, das ein Differentialgetriebe bildet.

5. Aktuator nach einem der vorangehenden Ansprüche, **dadurch gekennzeichnet, dass** der erste gewindete Abschnitt (26) dem zweiten gewindeten Abschnitt (28) benachbart ist.

6. Aktuator nach einem der vorangehenden Ansprüche, **dadurch gekennzeichnet, dass** die Winkel der Gewinde des ersten und zweiten gewindeten Abschnitts in Bezug zu einer zu der Rotationsachse A orthogonalen Ebene eine identische Amplitude, aber mit unterschiedlichen Vorzeichen, haben.

7. Aktuator nach einem der Ansprüche 1 bis 5, **dadurch gekennzeichnet, dass** die Winkel der Gewinde des ersten und zweiten gewindeten Abschnitts in Bezug zu einer zu der Rotationsachse A orthogonalen Ebene unterschiedliche Amplituden und unterschiedliche Vorzeichen haben.

8. Aktuator nach einem der vorangehenden Ansprüche, **dadurch gekennzeichnet, dass** die Durchmesser der Gewinde des ersten und zweiten gewindeten Abschnitts identisch sind.

9. Aktuator nach einem der Ansprüche 1 bis 7, **dadurch gekennzeichnet, dass** die Durchmesser der Gewinde des ersten und zweiten gewindeten Abschnitts unterschiedlich sind.

10. Aktuator nach einem der vorangehenden Ansprüche, **dadurch gekennzeichnet, dass** die erste Mutter (22) mit dem Rotor nicht lösbar fest verbunden oder befestigt oder gekoppelt ist.

11. Aktuator nach einem der Ansprüche 1 bis 9, **dadurch gekennzeichnet, dass** die erste Mutter (22) mit dem Rotor lösbar gekoppelt ist, konfiguriert, um mindestens eine Verschiebung in einer zur Achse A des Rotors (16) parallelen Richtung durchzuführen.

12. Aktuator nach einem der vorangehenden Ansprüche, **dadurch gekennzeichnet, dass** das Linearverlagerungsorgan (15) einen Führungsteil (36) umfasst, der einen mit dem Gehäuse (8) gekoppelten oder befestigten Führungsteil (34, 34') aufnimmt, wobei die Führungsteile konfiguriert sind, um eine rein translatorische Bewegung des verlagernden Organs (15) zu definieren.

13. Aktuator nach einem der Ansprüche 1 bis 11, **dadurch gekennzeichnet, dass** das Linearverlagerungsorgan (15) einen Führungsteil (36) umfasst, der einen mit dem Gehäuse (8) gekoppelten oder befestigten Führungsteil (34, 34') aufnimmt, wobei die Führungsteile konfiguriert sind, um gleichzeitig eine translatorische und eine Rotationsbewegung des verlagernden Organs (15) zu definieren.

14. Aktuator nach einem der vorangehenden Ansprüche, **dadurch gekennzeichnet, dass** er eine Rückstellfeder (12) umfasst, die mit der Schraube (20) gekoppelt ist, die konfiguriert ist, um die Schraube bei einem Ausfall des Aktuators in eine "fail-safe"-Position zu verlagern.

15. Aktuator nach einem der vorangehenden Ansprüche, **dadurch gekennzeichnet, dass** die Schraube mit dem zu verlagernden Organ (15) mittels eines Lagers gekoppelt ist, das die freie Rotation der Schraube in Bezug zu dem zu verlagernden Organ erlaubt.

## Claims

1. An electric linear actuator including an electric motor (4) comprising a rotor (16) and a stator (18), a housing (8, 10) and a screw-nut system (16) for moving a member to be displaced (15) at least in translation in a direction (A) parallel to the axis of rotation of the rotor, the screw-nut system (6) comprising a screw (20) with a first threaded portion (26) and a first nut (22) with a complementary thread engaging the first threaded portion (26), the first nut (22) being coupled in rotation to the rotor, the screw (20) comprising a second threaded portion (28) and the screw-nut system comprising a second nut (24) engaging the second threaded portion (28), the second threaded portion and the second nut configured to apply a reduction factor in the linear movement of the screw with respect to a screw-nut system having only the first threaded portion and the first nut in the rotor, the first and second threaded portions having threads crossed relative to each other.

2. The actuator according to claim 1, **characterized in that** the second nut (24) is integral with the housing, or is non-removably coupled to the housing (8).

3. The actuator according to claim 1 or 2, **characterized in that** it comprises a reduction gear system (19) coupling the first nut (22) to the rotor.

4. The actuator according to claim 1, **characterized in that** the second nut (24) is coupled to the first nut (22) or to the rotor (16) of the motor by means of a gear system forming a differential reducer.

5. The actuator according to any one of the preceding claims, **characterized in that** the first threaded portion (26) is adjacent to the second threaded portion (28).

6. The actuator according to any one of the preceding claims, **characterized in that** the angles of the threads of the first and second threaded portions with respect to a plane orthogonal to the axis of rotation A have identical amplitude, but different signs.

7. The actuator according to one of claims 1 to 5, **characterized in that** the angles of the threads of the first and second threaded portions with respect to a plane orthogonal to the axis of rotation A have different amplitudes and different signs.

8. The actuator according to any one of the preceding claims, **characterized in that** the diameters of the threads of the first and second threaded portions are identical.

9. The actuator according to any one of claims 1 to 7, **characterized in that** the diameters of the threads of the first and second threaded portions are different.

10. The actuator according to any one of the preceding claims, **characterized in that** the first nut (22) is integral with or attached or coupled to the rotor in an irremovable manner.

11. The actuator according to any one of claims 1 to 9, **characterized in that** the first nut (22) is removably coupled to the rotor, configured to carry out at least one translation in a direction parallel to the axis A of the rotor (16).

12. The actuator according to any one of the preceding claims, **characterized in that** the linear displacement member (15) comprises a guide portion (36) engaging a guide portion (34, 34') coupled or attached to the housing (8), the guide portions configured to define a pure translation movement of the member to be displaced (15).

13. The actuator according to any one of the preceding claims 1 to 11, **characterized in that** the linear displacement member (15) comprises a guide portion (36) engaging a guide portion (34, 34') coupled or attached to the housing (8), the guide portions configured to carry out a simultaneous translation and rotation movement of the member to be displaced (15).

14. The actuator according to any one of the preceding claims, **characterized in that** it comprises a return spring (12) coupled to the screw (20), configured to displace the screw in a "fail-safe" position in the event of a breakdown of the actuator.

15. The actuator according to any one of the preceding claims, **characterized in that** the screw is coupled to the member to be displaced (15) through a bearing allowing the free rotation of the screw with respect to the member to be displaced.
